# EUROPEAN PATENT APPLICATION

(11) **EP 3 470 959 A1**
(43) Date of publication of application: **17.04.2019**
(21) Application number: 17866241.7
(22) Date of filing: 01.09.2017
(51) Int. Cl.: G06F 3/01

(54) **OPERATING METHOD AND DEVICE APPLICABLE TO SPACE SYSTEM, AND STORAGE MEDIUM**

(30) Priority: 24.10.2016 CN 201610939290
(71) Applicant: China Mobile Communication Ltd., Research Institute, Beijing 100053 (CN); China Mobile Communications Corporation, Beijing 100032 (CN)
(72) Inventor: LIU, Yang, Beijing 100053 (CN)
(74) Representative: Gevers Patents
(86) International application number: PCT/CN2017/100230
(87) International publication number: WO 2018/076927

(57) **Abstract**

An operation method and apparatus applicable to a space system, and a storage medium. The method comprises: tracking an operation object by means of a tracking component to detect an input operation of the operation object (S101); determining attribute information of the input operation (SI02); determining whether the attribute information of the input operation meets a preset condition (S103); if the attribute information of the input operation meets the preset condition, determining to use a three-dimensional coordinate to represent a current location of the operation object (S104); and if a target object represented by a three-dimensional contour point correspondingly exists at a current location of the operation object, processing the target object according to the attribute information of the input operation (S105).

## Description

### CROSS-REFERENCE TO RELATED APPLICATION

The present application is filed based upon and claims benefit of Chinese Patent Application No. 201610939290.5, filed on October 24, 2016, the contents of which are hereby incorporated by reference in its entirety.

### TECHNICAL FIELD

The disclosure relates to an electronic technology, and in particular to an operation method and apparatus applicable to a space system and a storage medium.

### BACKGROUND

With the commercialization of three-dimensional technologies, particularly gradual maturity of technologies such as virtual reality (VR), augmented reality (AR), user interfaces are further extended to three-dimensional designs. Some original operations in a two-dimensional interface such as a mobile phone are required to be further extended in three-dimensional operations to be applicable. In a three-dimensional system, it is required to make a user operate freely, and meet a spatial cognition and a using habit of the user.

An existing solution is mainly a manner of selecting and dragging an operation object commonly used in the two-dimensional interface and depends on a gesture-based dragging operation in the two-dimensional interface. Such a single control manner reduces fun of the user in selection and control in an interface operation process. In addition, during an operation of the user in the two-dimensional interface, control in a three-dimensional space is required to be more consistent with a control experience of the user. For example, positions of three axes *x*, *y* and *z* in the three-dimensional space are all changed, accompanied with a change in an angular velocity. It is also one of requirements of the user in interaction in the three-dimensional space how to represent changes in the positions and the angular velocity in the three-dimensional space. Moreover, although there is an urgent need for a gesture operation applicable to the three-dimensional space, the two-dimensional interface will still be used for a long time. Therefore, it becomes an urgent problem to be solved how to provide an interactive mode of the gesture operation applicable to both the three-dimensional space and the two-dimensional interface.

### SUMMARY

In view of this, for solving at least one problem in the related art, embodiments of the disclosure provide an operation method and apparatus applicable to a space system and a storage medium, which can provide an interactive mode also applicable to an object operation in a three-dimensional space.

The technical solutions of the embodiments of the disclosure are implemented as follows.

The embodiments of the disclosure provide an operation method applicable to a space system, the method including the following operations.

An input operation of an operation object is detected by tracking the operation object by using a track component.

Attribute information of the input operation is determined.

It is determined whether the attribute information of the input operation meets a preset condition.

When the attribute information of the input operation meets the preset condition, a present position, represented by a three-dimensional coordinate, of the operation object is determined.

When there is a target object represented by a three-dimensional contour point at the present position of the operation object, the target object is processed according to the attribute information of the input operation.

The embodiments of the disclosure provide an operation apparatus applicable to a space system, the apparatus including a detection unit, a first determination unit, a judgment unit, a second determination unit and a processing unit.

The detection unit is configured to detect an input operation of an operation object by tracking the operation object by using a track component.

The first determination unit is configured to determine attribute information of the input operation.

The judgment unit may be configured to determine whether the attribute information of the input operation meets a preset condition.

The second determination unit is configured to, when the attribute information of the input operation meets the preset condition, determine a present position, represented by a three-dimensional coordinate, of the operation object.

The processing unit is configured to, when there is a target object represented by a three-dimensional contour point at the present position of the operation object, process the target object according to the attribute information of the input operation.

The embodiments of the disclosure also provide a computer storage medium having stored thereon computer-executable instructions for executing an operation method applicable to a space system in the embodiments of the disclosure.

The embodiments of the disclosure provide the operation method and apparatus applicable to the space system and the storage medium. Specifically, the input operation of an operation object is detected by tracking the operation object by using the track component. The attribute information of the input operation is determined. It is determined whether the attribute information of the input operation meets the preset condition. When the attribute information of the input operation meets the preset condition, the present position, represented by the three-dimensional coordinate, of the operation object is determined. When there is the target object represented by the three-dimensional contour point at the present position of the operation object, the target object is processed according to the attribute information of the input operation. Therefore, it can be provided an interactive mode also applicable to object operations in the three-dimensional space.

### BRIEF DESCRIPTION OF DRAWINGS

FIG. 1 is a schematic flowchart of an implementation of an operation method applicable to a space system according to an embodiment of the disclosure;
FIG. 2 is a schematic structural diagram of a composition of a computing device according to an embodiment of the disclosure;
FIG. 3 is a schematic flowchart of an implementation of an operation apparatus applicable to a space system according to an embodiment of the disclosure; and
FIG. 4 is a schematic diagram of a hardware entity of a computing device according to an embodiment of the disclosure.

### DETAILED DESCRIPTION

The technical solutions of the disclosure will further be described below in combination with the drawings and specific embodiments in detail.

### First embodiment

The embodiment of the disclosure provides an operation method applicable to a space system. The method is applied to a computing device. A function realized by the method may be realized by calling a program code through a processor in the computing device. Of course, the program code may be stored in a computer storage medium. It can be seen that the computing device at least includes the processor and the storage medium. Herein, the computing device may be various types of electronic devices with an information processing capability in a process of the specific embodiment. For example, the electronic device may include a mobile phone, a tablet computer, a desktop computer, a personal digital assistant (PDA), a navigator, a digital phone, a video phone, a television and the like.

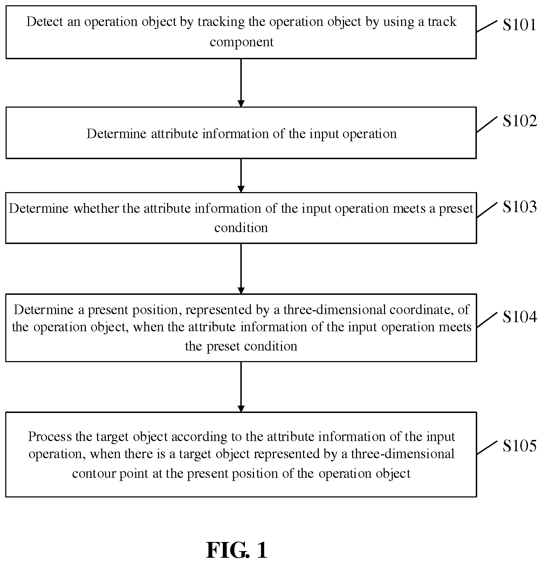

FIG. 1 is a schematic flowchart of an implementation of an operation method applicable to a space system according to an embodiment of the disclosure. As illustrated in FIG. 1, the method includes the following operations.

In S101, an input operation of an operation object is detected by tracking the operation object by using a track component.

Herein, the operation object includes a finger, a hand and an eyeball.

Herein, the track component is a component of a computing device. In an implementation process, the track component may be a camera.

In S102, attribute information of the input operation is determined.

In S103, it is determined whether the attribute information of the input operation meets a preset condition.

Herein, the attribute information of the input operation includes a duration of the operation object on which the input operation is performed, an attitude of the input operation, an operation distance, an operation direction, an acceleration *a* of the operation object or a direction of the acceleration. In S103, the duration of the operation object on which the input operation is performed and the attitude of the input operation are mainly used. Correspondingly, the preset condition includes a preset time threshold value or an attitude of the operation object. For example, it is determined whether the duration of the input operation is greater than a preset time threshold value. When the duration of the input operation is greater than the preset time threshold value, the preset condition is met; or when the duration of the input operation is less than the preset time threshold value, the preset condition is not met. For another example, the preset condition is a gesture such as double click, and it is determined whether the attitude of the input operation is the gesture such as the double click. When the gesture of the input operation is the gesture such as the double click, the preset condition is met; or on the contrary, the preset condition is not met.

In S104, when the attribute information of the input operation meets the preset condition, a present position, represented by a three-dimensional coordinate, of the operation object is determined.

In S105, when there is a target object represented by a three-dimensional contour point at the present position of the operation object, the target object is processed according to the attribute information of the input operation.

In another embodiment of the disclosure, the method further includes the following operation. In S106, when there is no target object represented by the three-dimensional contour point at the present position of the operation object, the input operation of an operation object is detected by tracking the operation object by using the track component. In the implementation process, the method further includes that: prompting information is outputted, the prompting information being configured to indicate that the target object is not determined at present.

In another embodiment of the disclosure, the method further includes the following operations. It is determined whether there is a target object represented by the three-dimensional contour point at the present position of the operation object. When there is a target object represented by the three-dimensional contour point at the present position of the operation object, the target object is processed according to the attribute information of the input operation. The operation that it is determined whether there is the target object represented by the three-dimensional contour point at the present position of the operation object further includes the following actions.

In Sill, an interaction object in a present scene is represented by using a three-dimensional contour point.

Herein, the scene may be any scene displayed on the computing device, for example, a game scene. Each scene is provided with an object configured to interact with the input operation of a user.

In S112, it is determined whether the present position of the operation object is in a range represented by the three-dimensional contour point of the interaction object.

In S113, when the present position of the operation object is in the range represented by the three-dimensional contour point of the interaction object, the interaction object is determined to be the target object.

In S114, when the present position of the operation object is not in the range represented by the three-dimensional contour point of the interaction object, it is determined that there is no target object represented by the three-dimensional contour point at the present position of the operation object.

In the implementation process, the method further includes that the present position of the operation object is determined. The operation that the present position of the operation object is determined further includes the following actions. An initial position, represented by a three-dimensional coordinate, of the operation object is determined by using the track component. An operation cursor in the space system is moved to the initial position. A target position, represented by a three-dimensional coordinate, of the operation object, is determined by tracking the operation object by using the track component, and the operation cursor is moved to the target position. The initial position or the target position of the operation object is determined to be the present position of the operation object.

In the embodiment of the disclosure, the operation that the target object is processed according to the attribute information of the input operation includes the following actions.

In S141A, an acceleration *a* of the operation object and a direction of the acceleration are determined by tracking the operation object by using the track component.

In S142A, a damping coefficient *z* set in the space system is acquired.

In S143A, the target object is moved in the space system according to the acceleration *a*, the direction of the acceleration and the damping coefficient z.

Herein, when the operation object is the hand, the input operation is a gesture. It is assumed at first that the interaction object has a certain mass *m*. The computing device analyzes the acceleration *a* of the hand according to a movement of the hand of the user and converts the acceleration into a "force" *f* acting on a module according to a formula *f*=*k***m***a* (*k* is a certain coefficient and may be a variable). In addition, it may also be assumed that a space has a certain damping effect and the damping coefficient is z. Then, the force received by the interaction object is represented as follows: *F*=*f*-*mz*=*k***m***a*-*mz*=*m(ka*-*z)*. Generally, *k* may be set to be 1.

In the embodiment of the disclosure, the operation that the target object is processed according to the attribute information of the input operation includes the following actions.

In S141B, an operation surface of the input operation is projected onto the target object.

In S142B, the operation direction and operation distance of the input operation are determined.

In S143B, the target object is moved according to the operation direction and the operation distance.

Herein, when the operation object is a hand, the input operation is a gesture. It is set that the interaction object has a certain mass m. A virtual acting surface (the surface may be a tangent plane of projection of the hand) may be formed on the module by using the gesture of the user. By using the acting surface, the hand may virtually contact with the module to achieve pushing, beating, pulling and stirring effects and the like. The acting surface may be displayed on the module to provide an exact feedback to the user. It is to be noted that, the case that the operation object is the eyeball is similar to the case that the operation object is the hand.

In the embodiment of the disclosure, the input operation of an operation object is detected by tracking the operation object by using the track component. The attribute information of the input operation is determined. It is determined whether the attribute information of the input operation meets the preset condition. When the attribute information of the input operation meets the preset condition, the present position, represented by the three-dimensional coordinate, of the operation object is determined. When there is the target object represented by the three-dimensional contour point at the present position of the operation object, the target object is processed according to the attribute information of the input operation. Therefore, an interactive mode also applicable to operations on objects in a three-dimensional space can be provided.

### Second embodiment

The embodiment provides an operation method applicable to a space system. The method is a method for natural human-computer interaction based on natural gesture and eye tracker in a three-dimensional space and includes the following operations.

In S201, three-dimensional coordinates are determined in a system in a three-dimensional interface where a user is located. That is, a certain space point position has specific *x*, *y* and *z* coordinate values, and different points have different values.

Herein, in such a digitalization method, the user may be taken as a center and a coordinate system may also be customized.

In S202, coordinates of all operation objects are digitized (a center of gravity (*x1*, *y1*, *z1*) and a value of a contour point of the whole object are set).

In S203, the user selects an operation object in some natural interactive modes, the modes including, but not limited to, a gesture, an eye tracker (that is, the selected object is determined by a focal point of an eye), a degree of curvature of a finger and the like.

Herein, in an implementation process, in a first example, a movement of a hand of the user is tracked, and a cursor is moved in each interaction object in the three-dimensional interface. When the hand swings leftwards and rightwards, the cursor is moved leftwards and rightwards. When the hand swings forwards and backwards, the cursor is moved forwards and backwards. When the hand swings upwards and downwards, the cursor is moved upwards and downwards. After the cursor is moved to the target object, the selected object is confirmed by a gesture of double click and the like or a dwell time. In a second example, in the second embodiment, an eyeball and a pupil of the user are tracked by eye-tracking technology to determine the interaction object to be selected by the user in the three-dimensional space, and the selection of the object is confirmed by the gesture of double click and the like or the dwell time. In a third example, an xy direction of the cursor in the three-dimensional space is selected by a position of the hand, or a movement of the cursor in front and rear (z-axis) directions is determined from the degree of curvature of the hand or the finger. The interaction object to be selected by the user in the three-dimensional space is determined, and the selection of the interaction object is confirmed by the gesture of double click and the like or the dwell time.

In S204, the user swings the hand, it is set that the interaction object has a certain mass *m* (the mass may be related to a volume of the interaction object). According to the movement of the hand of the user, an acceleration *a* of the hand is analyzed and the acceleration is converted into a "force" represented as follows: *f*=*k***m***a* acting on the interaction object (*k* is a certain coefficient and may be a variable). In addition, it may also be assumed that the space has a certain damping effect and a damping coefficient is z. Then, the force received by the interaction object is represented as follows: *F*=*f*-*mz*=*k***m***a*-*mz*=*m(ka*-*z)*. Generally, *k* may be set to 1.

In S205, the movement of the hand is projected onto the interaction object according to the gesture. An acting surface (the surface may be a tangent plane of a projection of the hand) is formed on the interaction object by using the hand according to a movement direction of the hand, to achieve pushing, beating, pulling and stirring effects and the like. The acting surface may be displayed on the interaction object to provide an exact feedback to the user.

In S206, according to a position of the acting surface, the interaction object may be flat pushed and may also rotate around the center of gravity towards a direction of the acting force, which is consistent with an effect in a force field (there may be no gravity). A movement direction, a velocity, an acceleration and a rotation direction, an angular velocity, an angular acceleration of the interaction object are related to a position of the acting surface, *m*, *a*, a shape of the interaction object and the damping coefficient *z*.

In S207, the user can freely control a movement of the interaction object in the interface space according to the rules.

In S208, moreover, the set of system and method is suitable for a two-dimensional interface, that is, a visual field in a dimension is reduced and the whole movement is projected onto a plane.

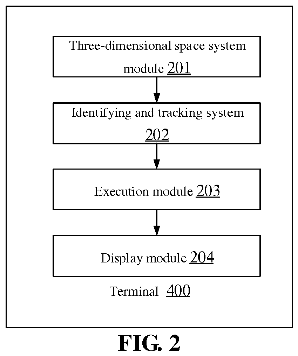

FIG. 2 is a schematic structural diagram of a composition of a computing device according to an embodiment of the disclosure. As illustrated in FIG. 2, the computing device includes a three-dimensional space system module 201, an identifying and tracking system 202, an execution module 203 and a display module 204.

The three-dimensional space system module 201 is configured to perform structurzation and coordinatograph on a user and all interface elements, and determine spatial positions and mutual relationship between the user and each module.

The identifying and tracking system 202 is configured to track an output of each natural interaction of the user to analyze an operation intention of the user for a space interface, and transmit information to the execution module.

The execution module 203 is configured to generate a movement command according to the identifying and tracking system and transmit a process and a result to the display module.

The display module 204 is configured to display the result in the whole three-dimensional space system.

In an implementation process, a hardware part of the identifying and tracking system may be implemented by using a track component such as a camera, and the display module may be implemented by using a display screen of the computing device. The three-dimensional space system module, a software part of the identification tracking system and the execution module may all form the apparatus in the third embodiment of the disclosure, namely, they are implemented by using a processor in the computing device. It can be seen from the above embodiment that a virtual acting surface (the surface may be a tangent plane of a projection of a hand) may be formed on an interaction object by using a gesture of the user. By using the acting surface, the hand may virtually contact with the module to achieve pushing, beating, pulling and stirring effects and the like. The acting surface may be displayed on the module to provide an exact feedback for the user.

### Third embodiment

Based on the abovementioned embodiments, the embodiment of the disclosure provides an operation apparatus applicable to a space system. Units of the apparatus and modules of the units may be implemented by using a processor of a computing device and, of course, may also be implemented by using a specific logic circuit. In an implementation process, the processor may be a central processing unit (CPU), a micro processing unit (MPU), a digital signal processor (DSP), a field-programmable gate array (FPGA) or the like.

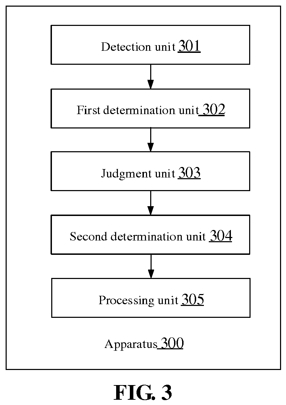

FIG. 3 is a schematic structural diagram of a composition of an operation apparatus applicable to a space system according to an embodiment of the disclosure. As illustrated in FIG. 3, the apparatus 300 includes a detection unit 301, a first determination unit 302, a judgment unit 303, a second determination unit 304 and a processing unit 305.

The detection unit 301 is configured to detect an input operation of an operation object by tracking the operation object by using a track component.

The first determination unit 302 is configured to determine attribute information of the input operation.

The judgment unit 303 is configured to determine whether the attribute information of the input operation meets a preset condition.

The second determination unit 304 is configured to, when the attribute information of the input operation meets the preset condition, determine a present position, represented by a three-dimensional coordinate, of the operation object.

The processing unit 305 is configured to, when there is a target object represented by a three-dimensional contour point at the present position of the operation object, process the target object according to the attribute information of the input operation.

In another embodiment of the disclosure, the attribute information of the input operation includes a duration of the operation object on which the input operation is performed, an attitude of the input operation, an operation distance, an operation direction, an acceleration *a* of the operation object or a direction of the acceleration.

In another embodiment of the disclosure, the processing unit is configured to, when there is no target object represented by the three-dimensional contour point at the present position of the operation object, trigger the detection unit to detect the input operation of an operation object by tracking the operation object by using the track component.

In another embodiment of the disclosure, the processing unit includes a representation module, a determination module, a first determination module and a processing module.

The representation module is configured to represent an interaction object in a present scene by using a three-dimensional contour point.

The determination module is configured to determine whether the present position of the operation object is in a range represented by the three-dimensional contour point of the interaction object.

The first determination module is configured to, when the present position of the operation object is in the range represented by the three-dimensional contour point of the interaction object, determine the interaction object to be the target object.

The processing module is configured to process the target object according to the attribute information of the input operation.

In another embodiment of the disclosure, the apparatus further includes a third determination unit. The third determination unit is configured to, when the present position of the operation object is not in the range represented by the three-dimensional contour point of the interaction object, determine that there is no target object represented by the three-dimensional contour point at the present position of the operation object.

In another embodiment of the disclosure, the apparatus further includes a fourth determination unit including a second determination module, a first movement module, a third determination module and a fourth determination module.

The second determination module is configured to determine an initial position, represented by a three-dimensional coordinate, of the operation object by using the track component.

The first movement module is configured to move an operation cursor in the space system to the initial position.

The third determination module is configured to determine a target position, represented by a three-dimensional coordinate, of an operation object by tracking the operation object by using the track component, and move the operation cursor to the target position.

The fourth determination module is configured to determine the initial position or the target position of the operation object to be the present position of the operation object.

In another embodiment of the disclosure, the processing unit includes a fifth determination module, an acquisition module and a second movement module.

The fifth determination module is configured to, when there is the target object represented by the three-dimensional contour point at the present position of the operation object, determine an acceleration *a* of the operation object and a direction of the acceleration by tracking the operation object by using the track component.

The acquisition module is configured to acquire a damping coefficient z set in the space system.

The second movement module is configured to move the target object in the space system according to the acceleration *a*, the direction of the acceleration and the damping coefficient z.

In another embodiment of the disclosure, the processing unit includes a projection module, a sixth determination module and a third movement module.

The projection module is configured to, when there is the target object represented by the three-dimensional contour point at the present position of the operation object, project an operation surface of the input operation onto the target object.

The sixth determination module is configured to determine an operation direction and an operation distance of the input operation.

The third movement module is configured to move the target object according to the operation direction and the operation distance.

In another embodiment of the disclosure, the operation object includes a finger, a hand and an eyeball.

It is to be pointed out that descriptions of the above apparatus embodiments are similar to descriptions of the method embodiments, and the apparatus embodiments have beneficial effects similar to those of the method embodiment. Technical details not disclosed in the apparatus embodiment of the disclosure may be understood with reference to the descriptions of the method embodiments of the disclosure.

In the embodiments of the disclosure, the operation method applicable to the space system may also be stored in a computer readable storage medium when being implemented in the form of a software function module and sold or used as an independent product. Based on such understanding, a part of the technical solution of the embodiments of the disclosure, which is essential or makes a contribution to the related art, or a part of the technical solution, may be embodied in form of a software product. The computer software product is stored in a storage medium, including several instructions to cause a computer device (which may be a personal computer, a server, a network device or the like) to perform all or part of the methods according to the embodiments of the disclosure. The foregoing storage medium includes various media that may store program code, such as a U disk, a portable hard disk, a read-only memory (ROM), a magnetic disk or an optical disk. As a consequence, the embodiments of the disclosure are not limited to a combination of hardware and software in any specific.

The embodiments of the disclosure provide a computer storage medium having stored thereon computer-executable instructions for executing an operation method applicable to a space system in the embodiments of the disclosure.

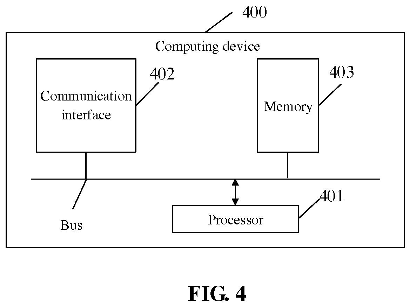

It is to be noted that a device for allocating an advertiser for an advertising area may be implemented by using a computing device such as a computer and a server. FIG. 4 is a schematic diagram of a hardware entity of a computing device according to an embodiment of the disclosure. As illustrated in FIG. 4, the hardware entity of the computing device 400 includes a processor 401, a communication interface 402 and a memory 403.

The processor 401 usually controls an overall operation of the computing device 400.

The communication interface 402 may cause the computing device to communicate with other terminals or servers through a network.

The memory 403 is configured to store an instruction and an application executable by the processor 401, may also cache data (for example, image data, audio data, voice communication data and video communication data) to be processed or having been processed by the processor 401 and each module in the computing device 400, and may be implemented by a flash or a random access memory (RAM).

It is to be noted that implementations and operations of a subject matter described in the specification can be implemented by a digital electronic circuit or computer software, firmware or hardware, including structures disclosed in the specification and structural equivalents thereof or a combinations of one or more of the structures and the structural equivalents thereof. The implementations of the subject matter described in the specification can be implemented by one or more computer programs, i.e., one or more computer program instruction modules, which are coded into one or more computer program media to be executed by a data processing apparatus or control operations of the data processing apparatus. Alternatively or additionally, a computer instruction may be coded onto an artificially generated propagation signal (for example, an electrical signal, an optical signal or an electromagnetic signal generated by a machine), and the signal is generated to code information to send it to a proper receiver apparatus for execution by the data processing apparatus. The computer storage medium can be or be included in a computer-readable storage device, a computer-readable storage carrier, a random or sequential access storage array or device or a combination of one or more thereof. Moreover, although the computer storage medium is not a propagation signal, the computer storage medium can be a source or a target of a computer program instruction coded in the artificially generated propagation signal. The computer storage medium can also be or be included in one or more independent components or media (for example, multiple compact discs (CDs), magnetic disks or other storage devices). Therefore, the computer storage medium may be tangible.

The operations described in the specification can be implemented as operations performed by the data processing apparatus on data stored in one or more computer-readable storage devices or received from other sources.

Term "client" or "server" includes all types of apparatus, devices and machines configured to process data, for example, including a programmable processor, a computer, a system on chip or multiple or a combination thereof. The apparatus can include a dedicated logic circuit, for example, an FPGA or an application specific integrated circuit (ASIC). Besides hardware, the apparatus can further include a code creating for an execution environment of the concerned computer program, for example, forming processor firmware, a protocol stack, a database management system, an operating system, a cross-platform running environment, a virtual machine or a combination of one or more thereof. The apparatus and the execution environment can implement various computing model infrastructures, for example, infrastructures of network service, distributed computing and grid computing.

The computer program (also called a program, software, a software application, a script or a code) can be written in any programming language form (including an assembly language or an interpretive language, a declarative language or a programming language) and can be deployed in any form (including an independent program or a module, a component, a subprogram, an object or another unit applicable to a computing environment). The computer program may but does not necessarily correspond to a file in a file system. The program may be stored in a part storing other program or data (for example, one or more scripts stored in a markup language document) of the file, a single file dedicated to the concerned program or multiple collaborative files (for example, files storing one or more modules, submodules or code parts). The computer program can be deployed to be executed on one or more computers, and the one or more computers are located at a station or distributed in multiple stations and mutually connected through a communication network.

The processes or logic flows described in the specification can be executed by one or more programmable processors configured to execute one or more computer programs to operate input data and generate output to execute actions. The above processes and the logic flows can also be executed by a dedicated logic circuit. Moreover, the apparatus can also be implemented as the dedicated logic circuit, for example, an FPGA or an ASIC.

The processor applicable to execution of the computer program includes, for example, a universal MPU, a dedicated MPU and any one or more processors of any digital computer type. In general, the processor may receive instructions and data from a ROM or a RAM or both. Main computing components include a processor configured to execute actions according to the instructions and one or more memories configured to store the instructions and the data. In general, the computer may further include one or more large-capacity storage devices (for example, magnetic disks, magneto-optical disks or optical disks) configured to store the data, or is operatively coupled to the devices to receive data therefrom or send data thereto, or both of the two conditions are included. However, the computer is not required to include such a device. Moreover, the computer can be embedded into another device, for example, a mobile phone, a PDA, a mobile audio player or a mobile video player, a game console, a global positioning system (GPS) receiver or a mobile storage device (for example, a universal serial bus (USB) flash), all of which are merely examples. A device applicable to storage of the computer program instructions and the data includes all forms of nonvolatile memories, media and storage devices, for example, including a semiconductor storage device (for example, an erasable programmable ROM (EPROM), an electrically EPROM (EEPROM) and a flash memory device), a magnetic disk (for example, an internal hard disk or a mobile hard disk), a magneto-optical disk, a compact disc read-only memory (CD-ROM) and a digital video disk read-only memory (DVD-ROM). The processor and the memory can be supplemented by the dedicated logic circuit or included in the dedicated logic circuit.

For providing interaction with a user, the implementations of the subject matter described in the specification can be implemented on a computer and the computer includes a display device, a keyboard and a pointing device (for example, a mouse, a trackball, a touch screen and a touch pad). The display device is, for example, a cathode ray tube (CRT), a liquid crystal display (LCD), an organic light-emitting diode (OLED), a thin film transistor (TFT), a plasma, other flexible configuration or any other monitor configured to display information to the user. The user can provide input for the computer through the keyboard and the pointing device. Devices of other types can also be configured to provide interaction with the user. For example, a feedback provided to the user can be a sensory feedback in any form, for example, a visual feedback, an auditory feedback or a tactile feedback. Moreover, the input from the user can be received in any form, including acoustic input, voice input or touch input. In addition, the computer can interact with the user by sending a document to a device used by the user and receive a document from the device. For example, a web page is sent to a web browser on a client of the user responsive to a request received from the web browser.

The implementations of the subject matter described in the specification can be implemented by a computing system. The computing system includes a backend component (for example, a data server), or includes a middleware component (for example, an application server), or includes a front-end component (for example, a client computer with a graphical user interface or a web browser, the user may interact with the implementations of the subject matter described in the application through the client computer), or include any combination of one or more of the above backend component, the middleware component and the front-end component. The components of the system can be interconnected by any digital data communication form or medium (for example, a communication network). An example of the communication network includes a local area network (LAN), a wide area network (WAN), an interconnection network (for example, the Internet) and a peer-to-peer network (for example, a self-organizing peer-to-peer network).

A feature described in the application may be achieved on a smart television module (or a connected television module, a hybrid television module and the like). The smart television module may include a processing circuit configured to integrate more conventional television program sources (for example, program sources received through a cable, a satellite, over the air or other signals) for the Internet connectivity. The smart television module may be physically integrated into a television or may include an independent device, for example, a set-top box (STB), a blue-ray or other digital media players, a game console, a hotel television system and other corollary devices. The smart television module may be configured to cause a viewer to search for and find a video, a movie, a picture or other content on a network, a local cable television channel and a satellite television channel or stored in a local hard disk. The STB or a set-top box unit (STU) may include an information applicable device. The information applicable device includes a tuner and is connected to the television and an external signal source, thereby tuning a signal into content to be later displayed on a television screen or other playing devices. The smart television module may be configured to provide a home screen or a top-level screen including icons to multiple different applications (for example, a web browser, multiple streaming media service, connecting cables or satellite media sources and other Internet "channels"). The smart television module may further be configured to provide an electronic program to the user. A corollary application of the smart television module may run on a mobile computing device to provide additional information about an available program to the user, thereby causing the user to control the smart television module and the like. In an alternate embodiment, the feature may be achieved in a portable computer or other PCs, a smart phone, other mobile phones, a handheld computer, a tablet PC or other computing devices.

Although the specification includes many specific implementation details, these implementation details should not be explained as limits to the scope of any claim but are descriptions of a feature specially made to a specific implementation. A specific feature described in a context of an independent implementation in the specification can also be implemented in a combination of single implementation. On the contrary, each feature described in a context of the single implementation can also be independently implemented in multiple implementations or implemented in any proper sub-combination. Moreover, although the feature may be described above as in a specific combination and even a function as required initially, one or more features in the required combination in some cases may be eliminated from the combination and the required combination may be a sub-combination or a variation of the sub-combination.

Similarly, although the operations are described in a specific sequence in the drawings, it should not be understood that the operations are required to be executed in the illustrated specific sequence or a sequential sequence or all of the illustrated operations are executed to achieve an expected result. In a specific environment, multi-task processing and parallel processing may be advantageous. In addition, the separation of system components in the above-described implementations should not be understood in a manner that the separation is required in all the implementations and should be understood in a manner that the described program components and system can usually be integrated together into a single software product or packaged into multiple software products.

Therefore, specific implementations of the subject matter have been described. Other implementations are within the range of the following claims. In some cases, actions limited in the claims can be executed in different sequences and can still achieve the expected result. In addition, the processes described in the drawings are not necessarily to be executed in the illustrated specific sequence or sequential sequence to achieve the expected result. In the specific implementations, multi-task processing or parallel processing may be adopted.

### INDUSTRIAL APPLICABILITY

In the embodiments of the disclosure, the input operation of the operation object is detect by tracking the operation object by using the track component; the attribute information of the input operation is determined; when the attribute information of the input operation meets the preset condition, the present position, represented by the three-dimensional coordinate, of the operation object is determined; and when there is the target object represented by the three-dimensional contour point at the present position of the operation object, the target object is processed according to the attribute information of the input operation. Therefore, an interactive mode also applicable to object operations in a three-dimensional space can be provided.

## Claims

1. An operation method applicable to a space system, comprising:
detecting an input operation of an operation object by tracking the operation object by using a track component;
determining attribute information of the input operation;
determining whether the attribute information of the input operation meets a preset condition;
determining a present position, represented by a three-dimensional coordinate, of the operation object, when the attribute information of the input operation meets the preset condition; and
processing the target object according to the attribute information of the input operation, when there is a target object represented by a three-dimensional contour point at the present position of the operation object.

2. The method of claim 1, wherein the attribute information of the input operation comprises a duration of the operation object on which the input operation is performed, an attitude of the input operation, an operation distance, an operation direction, an acceleration *a* of the operation object or a direction of the acceleration.

3. The method of claim 1, further comprising:
detecting the input operation of the operation object by tracking the operation object by using the track component, when there is no target object represented by the three-dimensional contour point at the present position of the operation object.

4. The method of any one of claims 1-3, wherein processing the target object according to the attribute information of the input operation when there is the target object represented by the three-dimensional contour point at the present position of the operation object comprises:
representing an interaction object in a present scene by using a three-dimensional contour point;
determining whether the present position of the operation object is in a range represented by the three-dimensional contour point of the interaction object;
determining the interaction object to be the target object, when the present position of the operation object is in the range represented by the three-dimensional contour point of the interaction object; and
processing the target object according to the attribute information of the input operation.

5. The method of claim 4, further comprising:
determining that there is no target object represented by the three-dimensional contour point at the present position of the operation object, when the present position of the operation object is not in the range represented by the three-dimensional contour point of the interaction object; and
detecting the input operation of the operation object by tracking the operation object by using the track component.

6. The method of any one of claims 1-3, wherein determining the present position of the operation object comprises:
determining an initial position, represented by a three-dimensional coordinate, of the operation object by using the track component;
moving an operation cursor in the space system to the initial position;
determining a target position, represented by a three-dimensional coordinate, of the operation object by tracking the operation object by using the track component, and moving the operation cursor to the target position; and
determining the initial position or the target position of the operation object to be the present position of the operation object.

7. The method of any one of claims 1-3, wherein processing the target object according to the attribute information of the input operation comprises:
determining an acceleration *a* of the operation object and a direction of the acceleration by tracking the operation object by using the track component;
acquiring a damping coefficient z set in the space system; and
moving the target object in the space system according to the acceleration *a*, the direction of the acceleration and the damping coefficient *z*.

8. The method of any one of claims 1-3, wherein processing the target object according to the attribute information of the input operation comprises:
projecting an operation surface of the input operation onto the target object;
determining an operation direction and an operation distance of the input operation; and
moving the target object according to the operation direction and the operation distance.

9. The method of any one of claims 1-3, wherein the operation object comprises a finger, a hand and an eyeball.

10. An operation apparatus applicable to a space system, comprising: a detection unit, a first determination unit, a judgment unit, a second determination unit and a processing unit, wherein
the detection unit is configured to detect an input operation of an operation object by tracking the operation object by using a track component;
the first determination unit is configured to determine attribute information of the input operation;
the judgment unit is configured to determine whether the attribute information of the input operation meets a preset condition;
the second determination unit is configured to, when the attribute information of the input operation meets the preset condition, determine a present position, represented by a three-dimensional coordinate, of the operation object; and
the processing unit is configured to, when there is a target object represented by a three-dimensional contour point at the present position of the operation object, process the target object according to the attribute information of the input operation.

11. A computer storage medium having stored thereon computer-executable instructions to execute the operation method applicable to the space system of any one of claims 1-9.
